# EUROPÄISCHE PATENTSCHRIFT

(11) **EP 3 053 640 B1**
(45) Veröffentlichungstag und Bekanntmachung des Hinweises auf die Patenterteilung: **19.12.2018**
(21) Anmeldenummer: 15153988.9
(22) Anmeldetag: 05.02.2015
(51) Int. Cl.: B01D 65/00, C02F 1/44, B01D 61/08

(54) **Modularer Verteilerkopf für Membrangehäusekörper**
Modular distribution head for membrane housing body
Tête de répartiteur modulaire pour corps de boîtier à membrane

(43) Veröffentlichungstag der Anmeldung: 10.08.2016
(73) Patentinhaber: Knappe, Holger, 26780 Malataverne (FR); Knappe, Nils, 26780 Malataverne (FR)
(72) Erfinder: Knappe, Holger, 26780 Malataverne (FR); Knappe, Nils, 26780 Malataverne (FR)
(74) Vertreter: Weidner Stern Jeschke

(56) Entgegenhaltungen:
- WO-A1-2006/017887
- WO-A1-2010/051528
- WO-A1-2012/105835
- WO-A2-2005/028760
- WO-A2-2009/036717
- US-A- 4 016 078
- US-A- 5 282 964
- US-A1- 2008 110 504
- US-A1- 2009 173 690
- US-A1- 2012 074 053

## Beschreibung

Gegenstand der Erfindung ist ein modularer Verteilerkopf für einen Membrangehäusekörper umfassend eine Frontseite, die eine Seite des Verteilerkopfs ist, einen Rohr-Anschluss für den Membrangehäusekörper, der zum Abdichten des Membrangehäusekörpers dient, und der auf der Frontseite gegenüberliegenden Seite des Verteilerkopfs angeordnet ist, eine Dichtung zum Abdichten des Membrangehäusekörpers, die im Rohr-Anschluss platziert ist, mindestens zwei Durchflussöffnungen, über die Flüssigkeit in und aus dem Verteilerkopf und dem Membrangehäusekörper fließen kann.

### Stand der Technik

Weltweit besteht ein großer Bedarf an Trinkwasser, wobei in vielen Gegenden der Bedarf an sauberem Wasser größer ist als die vorhandenen natürlichen Ressourcen. Der Zugang zu sauberem Trinkwasser hat weltweit eine hohe Bedeutung. Auf Grund des stetigen Bevölkerungswachstums und des höheren Wohlstands in vielen Ländern steigt der Bedarf an Süßwasser ständig an. Es gibt daher eine Reihe von Verfahren zur Trinkwassergewinnung und Wasseraufbereitung, um entsprechend Süßwasser bereit zu stellen. Für die Trinkwassergewinnung durch Meerwasserentsalzung und die Aufbereitung von Brackwasser wird meist ein Osmoseverfahren, wie reverse Osmose, oder Nano- und Ultrafiltration eingesetzt. Für die Durchführung der Osmose oder der Filtration von Wasser oder anderen Flüssigkeiten werden Membranen in Form von Membranelementen verwendet.

Neben seiner Bedeutung als Trinkwasser wird Wasser auch in zunehmendem Maße als Energielieferant genutzt z.B. für die Stromerzeugung durch Osmose. Bei diesem Verfahren sind Salzwasser und Süßwasser durch eine Membrane voneinander getrennt. Wassermoleküle diffundieren durch die Membrane in das Salzwasser, so dass in der Kammer mit Salzwasser Druck aufgebaut wird. Dieser Druck kann genutzt werden, um eine Turbine anzutreiben. Die Membranen sind in einem Gefäß untergebracht, dass großen Drücken stand hält und ein großes Fassungsvolumen hat.

Die Membrangefäße werden in größeren Anlagen zusammengeschaltet, so dass in einer Trinkwassergewinnungsanlage über 100 Membrangefäße miteinander gekoppelt sind. Die Membrangefäße werden mit einem Endabschnitt verschlossen und weisen üblicherweise entweder einen gerade Anschluss (Endport) oder einen seitlichen Anschluss (Sideport) auf. Über den geraden Anschluss oder den seitlichen Anschluss wird das Membrangefäß mittels Sammler mit einem Sammelgefäß verbunden. Die Verbindung erfolgt im Falle eines Endports über ein gebogenes Rohr (Bogen) und zwei Hydraulikkopplungen, im Falle eines Sideports über eine Hydraulikkopplung. Die Hydraulikkopplung bzw. eine der Hydraulikkopplungen wird an einen Anschluss, meist einen seitlichen Anschluss, des Membrangefäßes befestigt. Sowohl die seitlichen Anschlüsse, die Bögen als auch die Hydraulikkopplungen benötigen Platz, so dass zwei Membrangefäße immer in einem ausreichenden Abstand voneinander positioniert werden müssen. Die Anlagen haben einen entsprechend großen Platzbedarf, um die endständigen bzw. seitlichen Anschlüsse über die Hydraulikkopplungen verbinden zu können.

Die Hydraulikkopplungen sind zudem teuer, da sie zumindest zum größten Teil aus Edelstahl bestehen. Bei einer Anlage mit vielen Membrangefäßen, die miteinander gekoppelt werden, ist eine Kostenposition somit die Anzahl der Hydraulikkopplungen bei Sideports und bei Endports zusätzlich die Anzahl der Bögen.

Ein weiteres Problem, das sich bei der Wartung von Anlagen mit Membrangefäßen stellt, ist, dass es Membrangefäße in verschiedenen Größen, d.h. mit verschiedenen Durchmessern und Längen und für verschiedene Druckstufen gibt. Auch die Anschlüsse haben verschiedene Größen. Für unterschiedliche Anlagen werden daher unterschiedliche Endabschnitte zum Verschließen der Membrangefäße, unterschiedliche seitliche Anschlüsse, unterschiedliche Bögen und unterschiedliche Kopplungen benötigt. Dieses führt dazu, dass die Produktion, Lagerhaltung und Ersatzteilbeschaffung schwieriger ist und häufig nicht alle Größen vorrätig sind. Gerade Trinkwasseraufbereitungsanlagen sind zudem häufig in entlegenen Gegenden aufgebaut, so dass zusätzlich Transportschwierigkeiten hinzukommen. Die WO 2012/006362 A2 beschreibt eine Entsalzungsanlage mit mehreren Membrangefäßen. Es wird beschrieben, dass eine herkömmliche Anlage zur Wasseraufbereitung einen erheblichen Platzbedarf hat. Zur Lösung dieses Problems wird ein Mega-Membrangefäß eingesetzt, indem eine Vielzahl von Flüssigkeitsverteilungsrohren und Membranelementen angeordnet ist. Hierdurch kann auf einer geringeren Fläche eine größere Anzahl von Membranelementen konzentriert werden und es werden weniger Anschlüsse von den Membrangefäßen zum Sammlergefäß benötigt. Das System hat jedoch den Nachteil, dass die einzelnen Membrangefäße sehr groß sind und bei einer Wartung oder einem Austausch eines Druckrohres oder eines Membranelementes eine Vielzahl von Bauteilen demontiert werden muss. Zudem ist ein solches Gefäß drucktechnisch sehr aufwendig und teuer. Die WO 2012/105835 A1 offenbart ein modulares Umkehrosmosesystem mit quaderförmigen Verteilerköpfen, die mittels Zugankern gekoppelt sind.

Die WO 2005/028760 A2, die US 4,016,078 A und die WO 2010/051528 A1 offenbaren die Verwendung hybrider Materialien einzelner Bauteile in der Filtrationstechnik zur Verbesserung der Festigkeitseigenschaften. Aufgabe der Erfindung ist es einen Verteilerkopf für einen Membrangehäusekörper bereitzustellen, der einen platzsparenden und druckfesten Aufbau einer Anlage mit mehreren Membrangehäusekörpern ermöglicht und leicht zu warten ist. Der Verteilerkopf soll eine kostengünstigere Verbindung von einem Membrangehäusekörper zum Sammler bieten und es ermöglichen, die Anzahl an benötigten Bauteilen in einer Anlage zu reduzieren.

### Beschreibung der Erfindung

Die Aufgabe wird erfindungsgemäß gelöst durch einen modularen Verteilerkopf gemäß Anspruch 1.

Weitere Ausführungsformen sind Gegenstand der Unteransprüche oder nachfolgend beschrieben.
Der erfindungsgemäße Verteilerkopf (Multiport) dient zum Verschluss eines Membrangehäusekörpers und wird auf die Öffnung eines Membrangehäusekörpers aufgesetzt. Der Verteilerkopf hat eine Frontseite, die eine Seite des Verteilerkopfs ist, und einen Rohr-Anschluss für den Membrangehäusekörper, der zum Abdichten des Membrangehäusekörpers dient. Dieser Rohr-Anschluss ist auf der Seite des Verteilerkopfs angeordnet, die der Frontseite gegenüberliegt. Im Rohr-Anschluss ist eine Dichtung zum Abdichten des Membrangehäusekörpers platziert, bevorzugt eine Lippendichtung. Die Frontseite ist die Seite des Verteilerkopfs, die bei einem montierten Verteilerkopf auf der Seite der kompletten Anlage sichtbar ist, d.h. auf die frontal der Blick fällt. Der Verteilerkopf weist zudem mindestens zwei Durchflussöffnungen auf, über die Flüssigkeit in und aus dem Verteilerkopf und dem Membrangehäusekörper fließen kann. Die Durchflussöffnung ist entweder ein Flüssigkeitszulauf (Feed), über den die Ausgangsflüssigkeit z.B. Salzwasser oder Brackwasser in den Membrangehäusekörper strömt, oder ein Flüssigkeitsablauf, z.B. ein Filtratablauf, ein Permeatablauf oder ein Konzentratablauf, über den Flüssigkeit, z.B. Filtrat, Permeat oder Konzentrat aus dem Membrangehäusekörper herausströmt. Geeignete Flüssigkeiten, die durch die Verbindungsabschnitte strömen, sind beispielsweise Wasser, Chemikalien, Lebensmittel, je nach Anwendungsgebiet.

Der erfindungsgemäße Verteilerkopf weist im Innern mindestens einen Sammlerraum zum Sammeln der Flüssigkeit auf. Diese Flüssigkeit kann z.B. entweder die in den Membrangehäusekörper einströmende Flüssigkeit oder die aus dem MembranGehäusekörper ausströmende Flüssigkeit sein. Die Durchflussöffnungen des Verteilerkopfs sind senkrecht zur Frontseite angeordnet und weisen jeweils eine Kupplung auf, die in den Verteilerkopf integriert ist. Über die Kupplungen können die Durchflussöffnungen zweier benachbarter Verteilerköpfe direkt ohne eine zusätzliche externe Hydraulikkupplung gekoppelt werden. Zwischen den Verteilerköpfen entsteht so eine formschlüssige, flüssigkeitsdichte Verbindung. Hierdurch wird ein sehr geringer Abstand zwischen zwei benachbarten Verteilerköpfen erreicht, der nur der Dicke der integrierten Kupplung entspricht). Der erfindungsgemäße Verteilerkopf ist bevorzugt ein Hybrid aus Kunststoffbauteil und Aluminiumkern, das zumindest teilweise im Spritzgussverfahren hergestellt wird.

Unter einem Membrangehäusekörper wird erfindungsgemäß ein Membrangehäuse, ein Membran-Druckrohr, ein Membranbehälter oder ein Membrangefäß, verstanden, in dem ein oder mehrere Membranelemente platziert werden. Der Membrangehäusekörper ist nicht Teil des Membranaufbaus selbst, sondern der zylindrische Behälter, der die Membrane bzw. das Membranelement aufnimmt. Er ist auch bei hohen Drücken bis zu 100 bar Flüssigkeitsdruck druckbeständig.

Der erfindungsgemäße Verteilerkopf weist bevorzugt mindestens einen Hohlraum zur Aufnahme eines Verschluss-Zugelements auf, wobei der Hohlraum parallel zur Frontseite angeordnet ist. Wenn mindestens zwei erfindungsgemäße Verteilerköpfe, bevorzugt 2-8, besonders bevorzugt 4-8,Verteilerkopfe, nebeneinander platziert sind, kann ein Verschluss-Zugelement durch die Hohlräume der jeweils benachbarten Verteilerköpfe geführt werden. Das Zugelement weist in einer Ausführungsform eine Länge auf, die größer ist, als die Gesamtlänge der Verteilerköpfe und wird jeweils an der Außenseite fixiert, so dass die Verteilerköpfe zueinander fixiert sind und nicht verschoben werden können. Dieses stellt eine sehr platzsparende Verbindung dar. Die Verteilerköpfe sind dabei so positioniert, dass die Durchflussöffnung des ersten Verteilerkopfs mit der Durchflussöffnung des benachbarten zweiten Verteilerkopfs flüssigkeitsdicht koppelt. Eine zusätzliche Hydraulikkupplung oder ein Edelstahlstutzen werden zur Verbindung nicht benötigt.

In einer Ausführungsform weist der Verteilerkopf eine Kompressionsplatte auf, die senkrecht zur Frontseite angeordnet ist und Öffnungen zur Aufnahme der Verschluss-Zugelemente aufweist, die deckungsgleich zu den Hohlräumen angeordnet sind. Durch den Einsatz einer Kompressionsplatte kann die Zugkraft, die auf den Verteilerkopf wirkt und die die Verteilerköpfe zusammenhält, gleichmäßiger verteilt werden. Die Kompressionsplatte ist entweder als Abschlussplatte ausgebildet, so dass sie eine geschlossene Platte bildet, die die Durchflussöffnung verschließt oder mit einem Anschlussstutzen ausgebildet, um den Anschluss einer Rohrleitung mit Hydraulikkupplung zu bilden. Die Kompressionsplatte ist beispielsweise eine aus Aluminium gefertigte Platte oder ein Kunststoff-ummanteltes Stahlteil. Die Zugelemente sind bevorzugt Zugstangen oder Zugseile, beispielsweise eine Metallstange, ein Faserverbundseil oder ein Stahlseil. Es ist möglich, das Zugelement durch eine Befestigung, z.B. eine Mutter festzuziehen.

In einer Ausführungsform ist der erfindungsgemäße Verteilerkopf als Eingangsabschnitt (Feed) ausgebildet. In dieser Ausführungsform wird der Verteilerkopf an die Seite des Membrangehäusekörpers befestigt, über die die zu behandelnde Flüssigkeit in die Anlage strömt. Der Verteilerkopf hat in dieser Ausführungsform einen Sammlerraum zum Sammeln der Flüssigkeit.
In einer weiteren Ausführungsform ist der erfindungsgemäße Verteilerkopf als Ausgangsabschnitt ausgebildet. Bei dieser Ausführungsform wird der Verteilerkopf an der Seite des Membran-Gehäusekörpers befestigt, über die die behandelte Flüssigkeit, d.h. das Permeat und Konzentrat (Retentat) aus der Anlage strömen. Der Verteilerkopf hat in dieser Ausführungsform zwei Sammlerräume, einen zum Sammeln des Permeat und einen zum Sammeln des Konzentrats.

Der erfindungsgemäße Verteilerkopf ist quaderförmig oder würfelförmig. In einer Ausführungsform ist an die Kupplung der Durchflussöffnung des erfindungsgemäßen Verteilerkopfs ein Anschlussstutzen gekoppelt. Über den Anschlussstutzen kann der Verteilerkopf mit einer Rohrleitung zur Flüssigkeitszuleitung oder Ableitung gekoppelt werden. Die Kopplung erfolgt z.B. über eine Hydraulikkupplung.

Der erfindungsgemäße Verteilerkopf weist ein Kernelement auf, z.B. ein stranggepresstes Aluminiumprofil. Das Kernelement weist Bohrungen für die verschiedenen Durchflussöffnungen auf. Das Kernelement hat einen Kunststoffmantel, der durch Spritzgießen herstellbar ist. In einer Ausführungsform erfolgt die Herstellung des Verbindungsabschnitts mit mindestens folgenden Schritten:
Bereitstellen eines stranggepressten Aluminiumprofils,
Bohren der Öffnungen in das Profil,
Einsetzen des gebohrten Aluminiumprofils in ein Spritzgusswerkzeug und Umspritzen des Aluminiumprofils mit Kunststoff.

Durch die Verwendung eines dreidimensionalen Profils als Kernelement statt einer zweidimensionale Platte erhält der Verteilerkopf eine höhere Steifigkeit. Es ist drucktechnisch möglich Multiports mit großen Anschlüsse von z.B. 4 Zoll herzustellen. Die Kunststoffumspritzung dient dazu, das Aluminiumprofil vor Flüssigkeitskontakt zu schützen.

Bevorzugt werden über die erfindungsgemäßen Verteilerköpfe und den großen Anschluss im Zulauf acht Membrangehäusekörper untereinander verbunden d.h. in einer Reihe auf einer Ebene nebeneinander platziert und miteinander flüssigkeitsdicht gekoppelt.

In einer Ausführungsform weist der erfindungsgemäße Verteilerkopf einen Diffuser auf, der im Rohr-Anschluss angeordnet ist. Der Diffuser ist bevorzugt eine Platte mit mehreren Strömungsöffnungen, die bevorzugt regelmäßig über die Platte verteilt sind. Der Diffuser dient dazu, den Flüssigkeitsstrom möglichst gleichmäßig über den gesamten Rohrquerschnitt zu verteilen. Bei herkömmlichen Druckrohren erfolgt der Zulauf über einen an einer Seite des Membranquerschnitts platzierten Einlauf. Hierdurch wird die Membrane nicht auf ihrer gesamten Breite optimal angeströmt. Bei der Verwendung von Sideports ist zudem die Strömung zwischen den einander gegenüberliegend Sideports an Zulauf und Ablauf stärker als auf der gesamten Breite, so dass es dazu führen kann, dass sich Flüssigkeit unregelmäßig auf die Stirnfläche verteilt. Die angeströmte Membrane wird nicht voll ausgeschöpft. Der Verteilerkopf im Zulauf speist das Medium mittig auf die Stirnseite der Membrane ein. Der Diffuser sorgt für eine bessere Ausnutzung der Membrane, da eine gleichmäßigere Anströmung erfolgt.

Der erfindungsgemäße Verteilerkopf weist zudem einen Flussreduzierer zur Regulierung der Durchflussmenge auf. Bevorzugt ist der Flussreduzierer als Ring ausgebildet. Der Flussreduzierer wird im Rohr-Anschluss des Verbindungsabschnitts platziert. Durch die Wahl des Flussreduzierers kann die Menge an Flüssigkeit, die in den Membrangehäusekörper strömt, und die Strömungsgeschwindigkeit gesteuert werden. Durch Messungen des Differenzdrucks zwischen dem Zulauf und Retentat, lässt sich bestimmen, ob die Membrane im normalen Bereich arbeitet. Hierdurch kann die Flussmenge optimal auf die miteinander gekoppelten Druckrohre verteilt werden.
Aus der WO 2009/124559 A1 sind zylindrische Membrangehäuse bekannt, die bevorzugt mit dem erfindungsgemäßen Verteilerkopf kombiniert werden. Der erfindungsgemäße Verteilerkopf wird dann auf einem Membrangehäusekörper montiert, dass aufgebaut ist aus einem Innenelement, einer radialen Faserumwicklung und einer Ummantelung. In der Ummantelung sind wenigstens zwei Zugelemente eingelagert. Der Verteilerkopf weist in diesem Fall Ausnehmungen auf, die senkrecht zur Frontseite sind und in denen die axialen Zugelemente der Membrangehäusekörper angeordnet werden.

Die erfindungsgemäßen Verteilerkopfe sind geeignet für die Meer- oder Brackwasserentsalzung mittels reverser Osmose. Sie werden bevorzugt für Membrangehäusekörper für die Einsatzgebiete Nanofiltration (NF), Ultrafiltration (UF), Mikrofiltration (MF), Filtration verschiedener Medien, lonenaustausch, reverse Osmose (RO), Forward Osmose (FO) und Osmose verwendet. Diese Verfahren werden z.B. zur Meerwasser- oder Brackwasser-Entsalzung oder zur Energiegewinnung eingesetzt.
Die Aufgabe wird weiterhin gelöst durch eine Anlage zur Wasseraufbereitung oder Energiegewinnung aufweisend mindestens einen Membrangehäusekörper, mindestens ein Membranelement in jedem Membrangehäusekörper und mindestens einen erfindungsgemäßen Verteilerkopf. Bevorzugt werden Membrangehäusekörper, wie in der WO 2009/124559 A1 beschrieben, verwendet.
In einer Ausführungsform werden in der erfindungsgemäßen Anlage acht nebeneinanderliegende Membrangehäusekörper über die erfindungsgemäßen Verteilerköpfe miteinander gekoppelt. Bei einer Variante werden die Membrangehäusekörper in einen Container gestapelt. Eine erfindungsgemäße Anlage kann beispielsweise jeweils acht nebeneinander liegende, miteinander verbundene Membrangehäusekörper in acht übereinander liegenden Reihen, d.h. insgesamt 64 Rohre mit Verteilerkopf aufweisen, die in einem 20 Fuß-Container platziert sind.

Bevorzugt ist die erfindungsgemäße Anlage in einem Container ohne Wände, ohne Dach und ohne Türen platziert, d.h. es wird nur der Container als Rahmen verwendet. Dadurch ist es bei einem 20 Fuß-Container möglich bis zu 64 Membrangehäusekörper im Container zu platzieren. Bei einem konventionellen System könnte nur eine deutlich geringere Anzahl an Membrangehäusekörpern im Container platziert werden, da die herkömmlichen Membrangehäusekörper mit ihren Anschlüssen einen wesentlich größeren Platzbedarf haben. Wenn die Membrangehäusekörper im Container fest eingebaut sind, kann der Container als Rack verwendet werden, dass direkt in die Halle bzw. Freigelände gestellt werden kann, wo die Anlage errichtet und betrieben werden soll. Die Anlage ist fertig montiert und muss nur noch mit den Zu- und Abflüssen verbunden werden.

Die Verwendung der erfindungsgemäßen Verteilerköpfe bzw. der erfindungsgemäßen Anlage führt zu einer erheblichen Reduzierung des Platzbedarfs. Mit dem erfindungsgemäßen System lässt sich die Gebäudegröße, die für den Aufbau einer Anlage mit mehreren hundert Rohren benötigt wird, deutlich reduzieren. Ein herkömmliches Druckrohr mit einem Sideport hat eine Breite von z.B. 330 - 340 mm, gemessen von Stutzen zu Stutzen. Dieses führt bei Kopplung von zwei herkömmlichen Druckrohren zu einem Platzbedarf von ca. 660 - 680 mm Minimum. Mit den erfindungsgemäßen Verteilerkopf werden bei gleicher Dimension des Membrangehäusekörpers für zwei Druckrohre nur ca. 500 mm benötigt, da ein Druckrohr mit Verteilerkopf eine Breite von z.B. 250-255 mm hat.

Bei einem üblichen seitlichen Anschluss (Sideport) am Endabschnitt steht seitlich ein Zylinder ab. Dieser muss über eine Kupplung oder Klammer mit dem Zylinder des benachbarten Membrangehäusekörpers verbunden werden. Dieses führt dazu, dass bei dem herkömmlichen System z.B. 4 Druckrohre oder 8 Rohre nebeneinander einen deutlichen Platzbedarf haben, z.B. bei 8 Rohren nebeneinander einen Platzbedarf von ca. 2,7 m. Bei Verwendung des erfindungsgemäßen Verteilerkopfs besteht ein deutlich geringerer Platzbedarf.

Neben dem geringeren Platzbedarf ist ein weiterer Vorteil der erfindungsgemäßen Verteilerköpfe, dass Anschlussstutzen und Hydraulik-Verbindungen zwischen den Membrangehäusekörpern nicht mehr nötig sind, da die Verteilerköpfe direkt miteinander verbunden werden. Entsprechend können Hydraulikkupplungen und Anschlussstutzen eingespart werden, die zurzeit aus Edelstahl sind und daher vergleichsweise teuer. Die Sammler in den Verteilerköpfen werden direkt ohne Hydraulikports untereinander verbunden.

Das erfindungsgemäße System hat zudem den Vorteil, dass eine Auslegung für verschiedene Druckstufen verwendet werden kann und nicht mehr Anschlüsse in verschiedenen Zollgrößen verwendet werden. Statt bisher separate Bauteile für Systeme für die Druckstufen 21, 31, 42, 70 und 84 bar mit 1-8 Membranelementen bereitzustellen und für seitliche Anschlüsse (Sideports) in z.B. 1,5 Zoll, 2 Zoll, 2,5 Zoll, 3 Zoll oder 4 Zoll kann mit dem erfindungsgemäßen Verteilerkopf die Anzahl an Bauteilen erheblich reduziert werden.

Die erfindungsgemäßen Verteilerköpfe werden jeweils auf das offene Ende des zylindrischen Membrangehäusekörpers aufgesetzt. Dieses hat den Vorteil, dass anders als bei z.B. Sideports keine Bohrungen in der Seitenwand des Membrangehäusekörpers erfolgen und große Öffnungen (4 Zoll bei 8 Zoll großen Membrangehäusekörpern) möglich sind. Die Bohrungen beeinträchtigen die Festigkeit/Stabilität in einem klassischen Membrangehäusekörpers, da ein Eingriff in die Struktur der Seitenwand erfolgt. Es besteht daher immer ein gewisses Risiko, dass sich um die Bohrung herum Mikrorisse bilden, die die Stabilität beeinträchtigen. Da bei Verwendung des erfindungsgemäßen Verteilerkopfs keine materialschwächenden Bohrungen notwendig sind, ist auch das Risiko von Mikrorissen entsprechend beseitigt.

Ein weiteres Problem beim herkömmlichen System liegt bei der Wartung. Jeweils seitliche Anschlüsse sind über Hydraulikkupplungen miteinander verbunden. Die Kupplungen sind als Halbschalen ausgebildet. Die Druckrohre sind jeweils mit Lippendichtungen abgedichtet. Wenn eine Lippendichtung defekt ist, müssen beim herkömmlichen System alle Anschlüsse für die Flüssigkeitszuläufe und -abläufe abgebaut werden, da es nicht möglich ist die Endabschnitte oder Kupplungen einzelnen zu demontieren. Da zwischen den einzelnen Bauteilen keine Lücke ist, kann z.B. eine Lippendichtung ohne eine Demontage nicht in das System eingebracht werden. Bei dem erfindungsgemäßen Verteilerkopf und der erfindungsgemäßen Anlage kann ein Verteilerkopf einzeln entfernt werden und entsprechend auch die Dichtung bei abgenommenem Verteilerkopf getauscht werden ohne dass am Feed-, Retentat- oder Konzentratzulauf die Hydraulikkupplungen oder Rohrleitungen abgebaut werden müssen. Auch wenn ein Membrangehäusekörper ausgetauscht werden muss ist es bei den erfindungsgemäßen Multiports nicht notwendig, diese Flüssigkeitsanschlüsse zu demontieren oder benachbarte Membrangehäusekörper mit auszubauen.

Die Erfindung wird anhand der Figuren näher erläutert. Es zeigen
- Figur 1a: einen erfindungsgemäßen Verteilerkopf für den Flüssigkeitszulauf, der am Membrangehäusekörper montiert ist,
- Figur 1b: den erfindungsgemäßen Verteilerkopf gemäß Figur 1a ohne Membrangehäusekörper,
- Figur 2: einen Schnitt durch den erfindungsgemäßen Verteilerkopf gemäß Figur 1a,
- Figur 3: den erfindungsgemäßen Verteilerkopf gemäß Figur 1a mit Anschlussstutzen,
- Figur 4a: einen erfindungsgemäßen Verteilerkopf für den Flüssigkeitsablauf, der am Membrangehäusekörper montiert ist,
- Figur 4b: den erfindungsgemäßen Verteilerkopf gemäß Figur 4a ohne Membrangehäusekörper
- Figur 5: einen Schnitt durch einen erfindungsgemäßen Verteilerkopf gemäß Figur 4a,
- Figur 6: einen Membrangehäusekörper ohne Verteilerköpfe,
- Figur 7: einen Schnitt durch vier miteinander verbundene Verteilerköpfe gemäß Figur 1a,
- Figur 8: einen Schnitt durch vier miteinander verbundener Verteilerköpfe gemäß Figur 4a,
- Figur 9: einen Längsschnitt durch eine erfindungsgemäße Anlage mit vier Membrangehäusekörpern und jeweils vier miteinander verbundenen Verteilerköpfen an der Zulauf- und Ablaufseite der Membrangehäusekörper und
- Figur 10: eine Aufsicht auf die Frontseite des Verteilerkopfs aus Figur 4b.

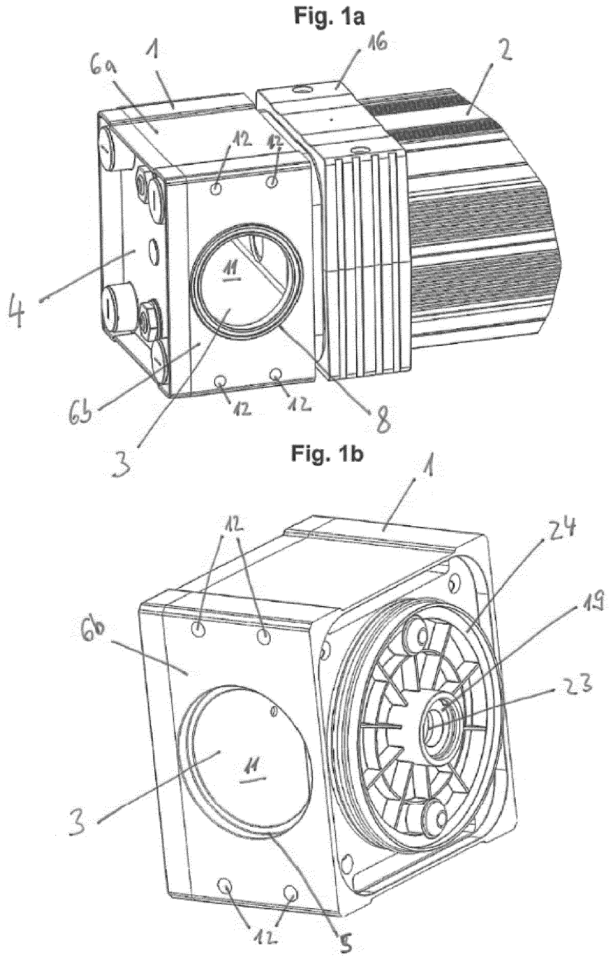

Figur 1a zeigt einen erfindungsgemäßen Verteilerkopf 1 in der Ausführungsform als Eingangsabschnitt (Feed). Der Verteilerkopf 1 ist mit einem Membrangehäusekörper 2 verbunden, der nur teilweise dargestellt ist. Der Verteilerkopf 1 weist zwei Durchflussöffnungen 3, von denen nur die vordere erkennbar ist, und eine Frontseite 4. Es sind zwei Seiten 6a und 6b des Verteilerkopfs 1 erkennbar. Die Durchflussöffnung 3 ist in der Seite 6b angeordnet. Die Durchflussöffnung 3 führt zu einem Sammlerraum 11, der sich im Inneren des Verteilerkopfs 1 befindet. In der Seite 6b sind zudem vier Öffnungen 12 erkennbar, die jeweils zur Aufnahme eines Verschluss-Zugelements 13 dienen. An der Durchflussöffnung 3 ist ein Kopplungsring 8 angeordnet, mit der der Verteilerkopf 1 an einen benachbarten Verteilerkopf gekoppelt wird.

Figur 1b zeigt den Verteilerkopf 1 gemäß Figur 1a ohne montierten Membrangehäusekörper 2. Der Rohranschluss ist mit einer Rückplatte 24 verschlossen. Die Rückplatte 24 weist eine Durchflussöffnung 23 zum Membrangehäusekörper auf. In der Durchflussöffnung 23 ist ein Flussreduzierer 19 angeordnet. Die Durchflussöffnung 3 weist einen Sitz 5 für den Koppler 8 auf, der hier nicht montiert ist.

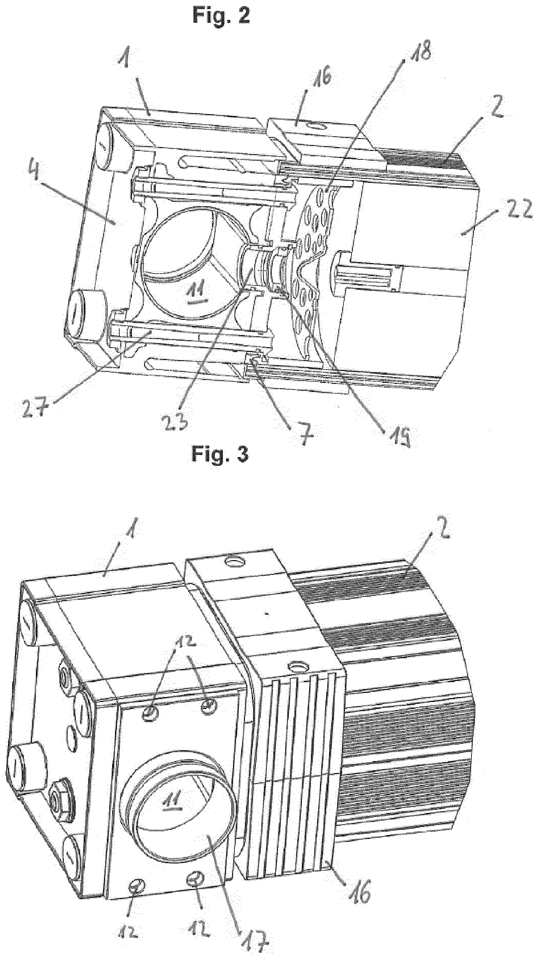

Figur 2 zeigt einen Schnitt durch den Verteilerkopf 1 gemäß Figur 1. Der Verteilerkopf 1 ist an einem Membrangehäusekörper 2 befestigt. Im Membrangehäusekörper (nicht vollständig dargestellt) ist ein Membranelement 22 erkennbar. Im Verteilerkopf 1 befindet sich eine Öffnung gegenüber der Frontseite 4, die als Rohranschluss für den Membrangehäusekörper 2 ausgebildet ist. Der Verteilerkopf 1 weist zudem eine Öffnung 27 für die Druckmessung im Zulauf auf. Der Membrangehäusekörper 2 ist mit einer umlaufenden Dichtung 7 abgedichtet. Aus dem Sammlerraum 11 kann die Flüssigkeit durch die Öffnung 23 in den

Membrangehäusekörper fließen. Hierbei strömt die Flüssigkeit durch den Flussreduzierer 19, der hier als Ring ausgebildet ist. Nach Durchströmen des Flussreduzierers 19 strömt die Flüssigkeit durch den Diffuser 18 und wird so gleichmäßig auf den Querschnitt des Membranelements 22 verteilt.

Figur 3 zeigt den Verteilerkopf 1 gemäß Figur 1a mit Anschlussstutzen 17. Über den Anschlussstutzen 17 kann der Verteilerkopf 1 mit dem Rohr zur Flüssigkeitszuleitung gekoppelt werden. Üblicherweise erfolgt die Kopplung über eine Hydraulikkupplung.

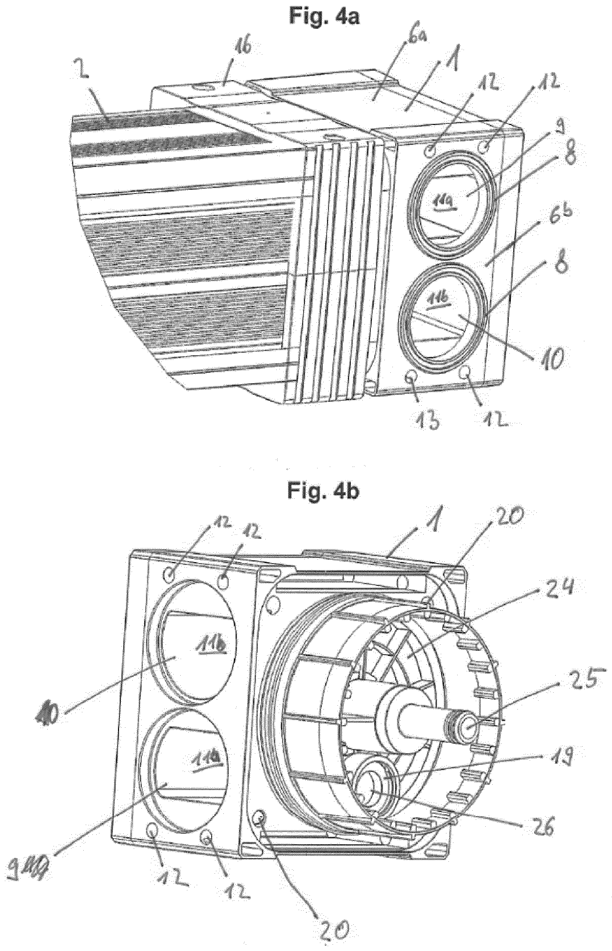

Figur 4a zeigt einen erfindungsgemäßen Verteilerkopf 1 der als Ausgangsabschnitt ausgebildet ist. In der Seite 6b des Verteilerkopfs sind eine Durchflussöffnung 10 für das Permeat und eine Durchflussöffnung 9 für das Konzentrat erkennbar. Die Durchflussöffnung 9 führt zu einem Sammlerraum 11 a für das Konzentrat, während die Durchflussöffnung 10 zu einem 2. Sammlerraum 11b für das Permeat führt. Der Verteilerkopf 1 weist ausgehend von der Seite 6b ebenfalls vier Hohlräume 12 zur Aufnahme der Verschluss-Zugelemente auf.

In Figur 4b ist eine Verteilerkopf 1 gemäß Figur 4a ohne montierten Membrangehäusekörper 2 erkennbar. Der Rohranschluss ist mit einer Rückplatte 24 verschlossen. Mittig in der Rückplatte 24 ist ein Membranverbinder 25 angeordnet. Durch den Membranverbinder 25 gelangt das Permeat aus der Membrane in den Permeatsammlerraum 11b. In der Rückplatte ist auch ein Konzentratausgang 26 angeordnet, durch den das Konzentrat -gegebenenfalls durch einen Flussreguliererin den Konzentratsammlerraum 11a gelangt.

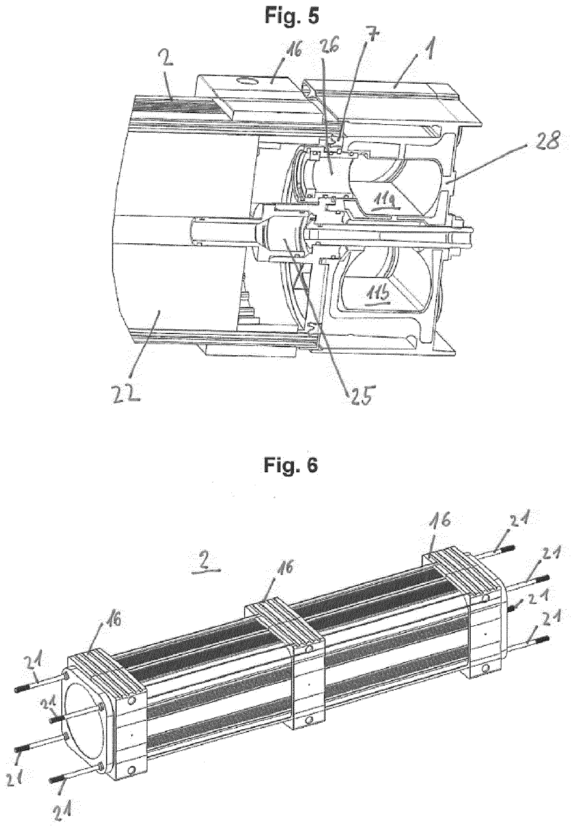

Figur 5 zeigt einen Schnitt durch den erfindungsgemäßen Verteilerkopf 1 gemäß Figur 4a. Es sind der Sammlerraum 11a für das Konzentrat und der Sammlerraum 11b für das Permeat erkennbar. Der Membrangehäusekörper 2 ist ebenfalls über eine Dichtung 7 mit dem Verteilerkopf 1 verbunden. Der Sammlerraum 11a weist zusätzlich einen Anschluss 28 für eine Messlanze zur Druckmessung des Konzentrats auf.

Figur 6 zeigt einen Membrangehäusekörper 2 ohne Verteilerköpfe. Im Membrangehäusekörper 2 sind jeweils vier axiale Zugelemente 21 angeordnet. Der Membrangehäusekörper 2 weist zudem drei Sattel 16 auf, vor die die Verteilerköpfe 1 davor gesetzt werden. Die Sattel 16 dienen zum Aufeinanderstapeln der Membrangehäusekörper 2 und zum Abstützen des Membrangehäusekörpers 2 auf dem Boden.

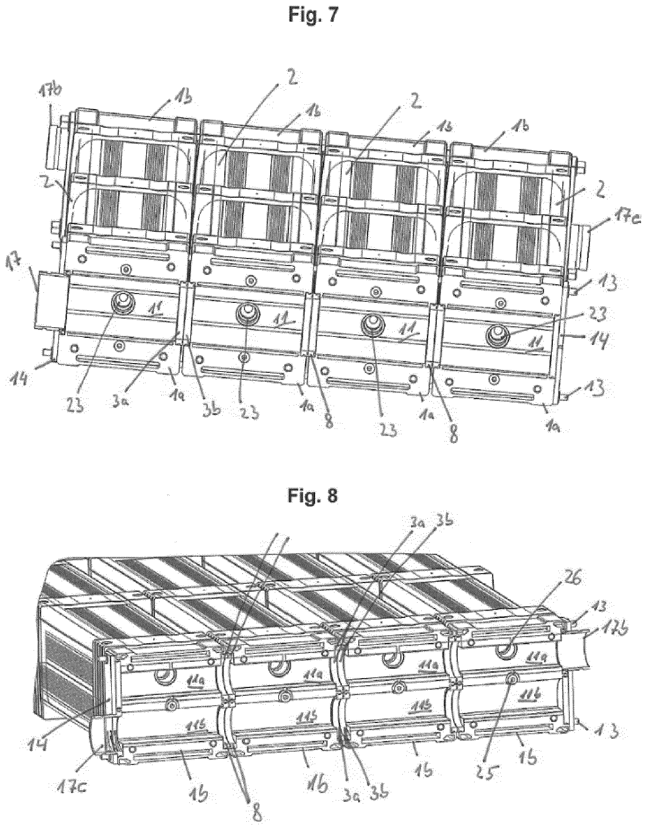

In Figur 7 ist eine erfindungsgemäße Anlage mit vier erfindungsgemäßen Verteilerköpfen 1 auf der Feed-Seite und vier erfindungsgemäßen Verteilerköpfen 1 auf der Permeat/Konzentrat-Seite dargestellt. Zwischen den beiden Einheiten von Multiports befinden sich vier Membrangehäusekörper 2. Die Verteilerköpfe 1a auf der Feed-Seite sind als Schnittzeichnung dargestellt. Es ist erkennbar, dass jeweils die Durchflussöffnungen 3a und 3b von 2 benachbarten Verteilerköpfen über den Koppler 8 miteinander verbunden sind. Die Verteilerköpfe 1 werden über vier Verschluss-Zugelemente 13 zusammengehalten. An der Außenseite der jeweils äußeren Verteilerköpfe befinden sich Kompressionsplatten 14. Jeder der Verteilerkopf 1 weist eine Durchflussöffnung 23 zum Membrangehäusekörper auf. Im Schnitt sind die offenen Sammlerräume 11 in jedem der Verteilerköpfe erkennbar. Im hinteren Bereich sind die Anschlussstutzen 17 b zur Ableitung des Konzentrats und 17c zur Ableitung des Permeats erkennbar.

Figur 8 zeigt einen Ausschnitt aus der Anlage aus Figur 7 von der Rückseite. Die Verteilerköpfe 1b sind hier als Schnittzeichnung dargestellt. Es ist erkennbar, dass jeder Verteilerkopf 1b Sammlerräume 11 a und 11 b aufweist. Dabei sind jeweils die Sammlerräume 11a der Verteilerköpfe 1b über Durchflussöffnungen miteinander verbunden. Ebenso sind die Sammlerräume 11 b über Durchflussöffnungen miteinander verbunden. Am äußersten Ende der Sammlerräume 11 a ist ein Verbindungsstutzen 17 b erkennbar. Auf der anderen Seite am äußersten Ende der miteinander verbundenen Sammlerräume 11b ist ein Verbindungsstutzen 17c erkennbar. Die einzelnen Verteilerköpfe 1 werden ebenfalls über Verschluss-Zugelemente 13 zusammengehalten.

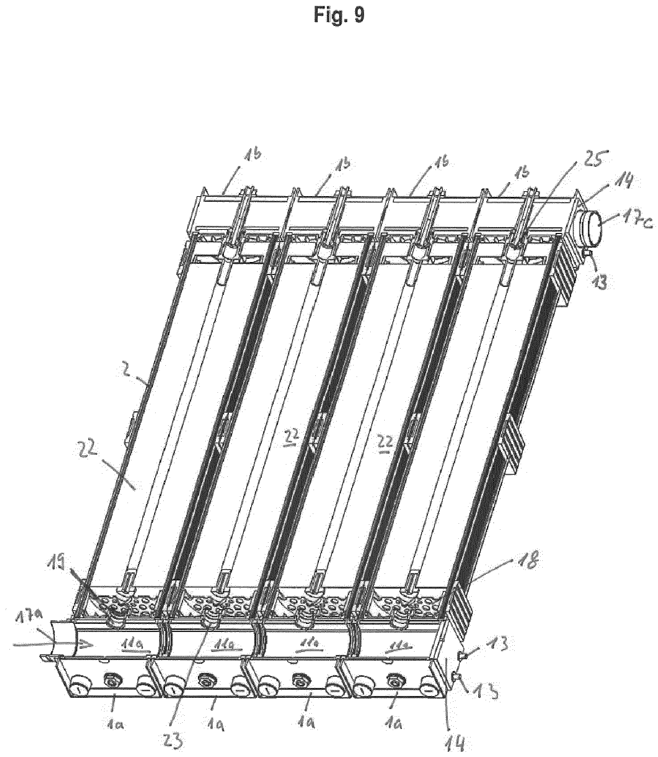

Figur 9 zeigt einen Längsschnitt durch die erfindungsgemäße Anlage gemäß Figur 7 und 8. Über den Verbindungsstutzen 17a strömt Flüssigkeit in die Sammlerräume 11a der Verteilerköpfe 1a. Die Flüssigkeit strömt dann über die Durchflussöffnungen 23 durch den Flussreduzierer 19 zum Diffuser 18. Am Diffuser 18 wird die Flüssigkeit über den Querschnitt des Membrangehäusekörpers 2 verteilt und strömt durch die Membranelemente 22. Die in Konzentrat und Permeat aufgespaltene Flüssigkeit gelangt dann am anderen Ende der Membrangehäusekörper 2 in die Sammlerräume der Verteilerköpfe 1b. Das Permeat verlässt über den Verbindungsstutzen 17c wiederum die Anlage.

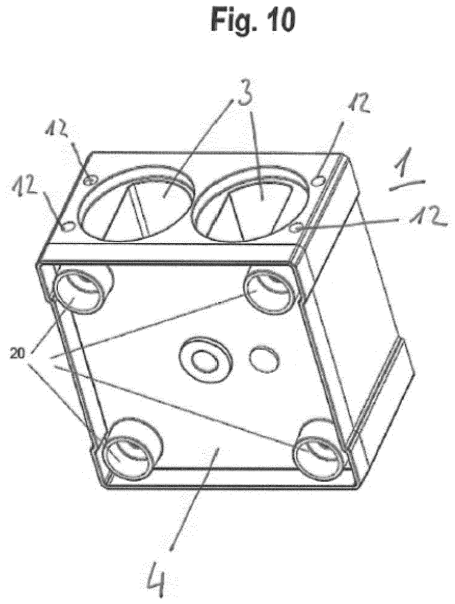

Figur 10 zeigt eine Aufsicht auf die Frontseite 4 des Verteilerkopfs 1 aus Figur 4b. Im Verteilerkopf 1 sind sowohl die Ausnehmungen 20 für die axialen Zugelemente, als auch die Hohlräume 12 zur Aufnahme der Verschluss-Zugelemente erkennbar.

### Bezugszeichenliste

- 1: Verteilerkopf
- 2: Membrangehäusekörper
- 3: Durchflussöffnung für Feed
- 4: Frontseite
- 5: Sitz für Koppler
- 6: Seite des Verteilerkopfs
- 7: Dichtung
- 8: Koppler
- 9: Durchflussöffnung für Konzentrat
- 10: Durchflussöffnung für Permeat
- 11: Sammlerraum
- 12: Hohlraum zur Aufnahme eines Verschluss-Zugelements
- 13: Verschluss-Zugelement
- 14: Kompressionsplatte
- 15: Öffnungen in Kompressionsplatte
- 16: Sattel Membrangehäusekörper
- 17: Anschlussstutzen
- 18: Diffuser
- 19: Flussreduzierer
- 20: Ausnehmungen für axiale Zugelemente
- 21: axiales Zugelement
- 22: Membranelement
- 23: Durchflussöffnung zum Membrangehäusekörper
- 24: Rückplatte
- 25: Membranverbinder
- 26: Konzentratausgang
- 27: Öffnung für Druckmessung im Zulauf
- 28: Anschluss für Messlanze

## Patentansprüche

1. Modularer Verteilerkopf (1) für die Meerwasser- oder Brackwasserentsalzung mittels reverser Osmose anschließbar an einen Membrangehäusekörper (2), wobei der Verteilerkopf (1) quaderförmig oder würfelförmig ist, umfassend
- mindestens zwei Durchflussöffnungen (3, 9, 10), über die Flüssigkeit in und aus dem Verteilerkopf (1) und zu dem anschließbaren Membrangehäusekörper (2) fließen kann, wobei der Verteilerkopf (1) im Innern mindestens einen Sammlerraum (11) zum Sammeln der Flüssigkeit aufweist,
- eine Frontseite (4), die eine Seite des Verteilerkopfs (1) bildet, wobei die Durchflussöffnungen (3, 9, 10) des Verteilerkopf (1) senkrecht zur Frontseite (4) an gegenüberliegenden Seiten des Verteilerkopfes (1) angeordnet sind,
- einen Rohr-Anschluss im Verteilerkopf (1) für den anschließbaren Membrangehäusekörper (2), der zum Abdichten des anschließbaren Membrangehäusekörpers (2) dient, und der auf einer der Frontseite (4) gegenüberliegenden Seite (6) des Verteilerkopfs (1) angeordnet ist und der einen Flussreduzierer (19) zur Regulierung einer Durchgangsmenge zum anschließbaren Membrangehäusekörper (2) aufweist,
- eine Dichtung (7) zum Abdichten des anschließbaren Membrangehäusekörpers (2), die im Rohr-Anschluss platziert ist,
- mindestens einen Hohlraum (12) zur Aufnahme eines Verschluss-Zugelements (13), wobei der Hohlraum (12) parallel zur Frontseite (4) angeordnet ist, und
- Ausnehmungen (20), die senkrecht zur Frontseite (4) sind und in denen axiale Zugelemente (21) des anschließbaren Membrangehäusekörpers (2) anordnenbar sind, **dadurch gekennzeichnet, dass** der Verteilerkopf (1) ein Kernelement aufweist, welches Bohrungen für die verschiedenen Durchflussöffnungen (3, 9, 10) und einen Kunststoffmantel herstellbar durch Spritzgießen aufweist.

2. Verteilerkopf (1) gemäß Patentanspruch 1, **dadurch gekennzeichnet, dass** der Verteilerkopf (1) eine Kompressionsplatte (14) aufweist, die senkrecht zur Frontseite (4) angeordnet ist und Öffnungen (15) zur Aufnahme der Verschluss-Zugelemente (13) aufweist, die deckungsgleich zu den Hohlräumen (12) angeordnet sind.

3. Verteilerkopf (1) gemäß einem der vorhergehenden Patentansprüche, **dadurch gekennzeichnet, dass** die Durchflussöffnungen (3, 9, 10) jeweils einen Koppler (8) aufweisen, der in den Verteilerkopf (1) integriert ist oder an die Durchflussöffnung (3, 9, 10) ein Anschlussstutzen (17) angeschlossen ist.

4. Verteilerkopf (1) gemäß einem der vorhergehenden Patentansprüche, **dadurch gekennzeichnet, dass** die Durchflussöffnungen (3, 9, 10) ein Flüssigkeitszulauf (3) (Feed), ein Permeatablauf (9) und/oder ein Konzentratablauf (10) sind.

5. Verteilerkopf (1) gemäß einem der vorhergehenden Patentansprüche, **dadurch gekennzeichnet, dass** der Verteilerkopf einen Diffuser (18) aufweist, der im Rohr-Anschluss angeordnet ist.

6. Membrangehäusekörper (2) zur Meerwasser- oder Brackwasserentsalzung mittels reverser Osmose mit mindestens zwei Verteilerköpfen (1) nach einem der Ansprüche 1 bis 5, **dadurch gekennzeichnet, dass** der Membrangehäusekörper bis 100 bar Flüssigkeitsdruck druckbeständig ist.

7. Anlage zur Meerwasser- oder Brackwasserentsalzung mittels reverser Osmose aufweisend mindestens einen Membrangehäusekörper (2) nach Anspruch 6 und mindestens ein Membranelement (22) in jedem Membrangehäusekörper.

8. Anlage gemäß Patentanspruch 7, wobei die Anlage mindestens zwei oder mehrere Membrangehäusekörper (2) gemäß Anspruch 6 aufweist, **dadurch gekennzeichnet, dass** ein Verschluss-Zugelement (13) durch die Hohlräume (12) der jeweils benachbarten Verteilerköpfe (1) geführt ist.

9. Anlage gemäß Patentanspruch 8, **dadurch gekennzeichnet, dass** mittel des Verschluss-Zugelementes (13) die benachbarten Verteilerköpfe (1) derart positioniert sind, dass die Durchflussöffnung (3, 9, 10) des ersten Verteilerkopfes (1) mit der Durchflussöffnung (3, 9, 10) des benachbarten zweiten Verteilerkopfes (1) flüssigkeitsdicht koppelt.

## Claims

1. A modular distributor head (1) for desalination of sea water or brackish water by reverse osmosis that is attachable to a membrane housing body (2), wherein the distributor head (1) is shaped as a parallelepiped or a cube, including
- at least two flow-through openings (3, 9, 10) through which the liquid can flow into and out of the distributor head (1) and towards the attachable membrane housing body (2), wherein the distributor head (1) comprises a collector chamber (11) for collecting the liquid,
- a front side (4), which forms a side of the distributor head (1), wherein the flow-through openings (3, 9, 10) of the distributor head (1) are disposed perpendicularly to the front side (4) at opposite sides of the distributor head (1),
- a pipe connection in the distributor head (1) for the attachable membrane housing body (2), which serves to seal off the attachable membrane housing body (2) and which is disposed on a side (6) of the distributor head (1) opposite to the front side (4) and which comprises a flow reducer (19) for regulating a flow rate into the attachable membrane housing body (2),
- a seal (7) for sealing off the attachable membrane housing body (2), which is placed in the pipe connection,
- at least one cavity (12) for receiving a locking traction element (13), wherein the cavity (12) is disposed parallel to the front side (4), and
- recesses (20), which are perpendicular to the front side (4) and in which axial traction elements (21) of the attachable membrane housing body (2) can be disposed, **characterized in that** the distributor head (1) comprises a core element, which comprises boreholes for the various flow-through openings (3, 9, 10) and a mantle of synthetic material that can be manufactured by injection moulding.

2. The distributor head (1) according to claim 1, **characterized in that** the distributor head (1) comprises a compression plate (14), which is disposed perpendicularly to the front side (4) and comprises openings (15) for receiving the locking traction element (13), which are congruent with the cavities (12).

3. The distributor head (1) according to one of the afore-mentioned claims, **characterized in that** the flow-through openings (3, 9, 10) comprise respectively one coupler (8), which is integrated in the distributor head (1), or that a connecting piece (17) is attached to the flow-through openings (3, 9, 10).

4. The distributor head (1) according to one of the afore-mentioned claims, **characterized in that** the flow-through openings (3, 9, 10) are a feed (3), a permeate outlet (9) and/or a concentrate outlet (10).

5. The distributor head (1) according to one of the afore-mentioned claims, **characterized in that** the distributor head comprises a diffuser (18), which is disposed in the connection pipe.

6. A membrane housing body (2) for desalination of sea water or brackish water by reverse osmosis with at least two distributor heads (1) according to one of the claims 1 to 5, **characterized in that** the membrane housing body has a pressure resistance of up to 100 bar of liquid pressure.

7. An installation for desalination of sea water or brackish water by reverse osmosis comprising at least one membrane housing body (2) according to claim 6 and at least one membrane element (22) in each membrane housing body.

8. The installation according to claim 7, wherein the installation comprises at least two or several membrane housing bodies (2) according to claim 6, **characterized in that** a locking traction element (13) is guided through the cavities (12) of the respectively adjacent distributor heads (1).

9. The installation according to claim 8, **characterized in that** the adjacent distributor heads (1) are positioned by means of the locking traction element (13) in such a manner that the flow-through opening (3, 9, 10) of the first distributor head (1) is coupled in a liquid-tight manner with the flow-through opening (3, 9, 10) of the adjacent second distributor head (1).

## Revendications

1. Tête de distribution modulaire (1) pour le dessalement d'eau de mer ou d'eau saumâtre par osmose inverse pouvant être raccordée à un corps de boîtier à membrane (2), où la tête de distribution (1) est de forme parallélépipédique ou cubique, comprenant
- au moins deux ouvertures d'écoulement (3, 9, 10) par lesquelles du liquide peut s'écouler dans et hors de la tête de distribution (1) et vers le corps de boîtier à membrane (2) raccordable, où la tête de distribution (1) comporte, à l'intérieur, au moins une chambre de collecte (11) pour la collecte du liquide,
- une face avant (4) qui forme un côté de la tête de distribution (1), où les ouvertures d'écoulement (3, 9, 10) de la tête de distribution (1) sont disposées perpendiculairement à la face avant (4) au niveau de côtés opposés de la tête de distribution (1),
- un raccord tubulaire dans la tête de distribution (1) pour le corps de boîtier à membrane (2) raccordable qui sert à étanchéifier le corps de boîtier de membrane (2) raccordable et qui est disposé sur un côté (6) de la tête de distribution (1) opposé à la face avant (4) et qui comporte un réducteur de débit (19) pour la régulation d'un débit vers le corps de boîtier de membrane (2) raccordable,
- un joint (7) placé dans le raccord tubulaire pour étanchéifier le corps de boîtier de membrane (2) raccordable,
- au moins une cavité (12) destinée à recevoir un élément de traction de verrouillage (13), où la cavité (12) est disposée parallèlement à la face avant (4), et
- des évidements (20) qui sont perpendiculaires à la face avant (4) et dans lesquels peuvent être disposés des éléments de traction (21) axiaux du corps de boîtier de membrane (2), **caractérisé en ce que** la tête de distribution (1) comporte un élément formant un noyau qui comporte des trous pour les différentes ouvertures d'écoulement (3, 9, 10) et un manteau en matière synthétique pouvant être fabriqué par moulage par injection.

2. Tête de distribution (1) selon la revendication 1, **caractérisée en ce que** la tête de distribution (1) comporte une plaque de compression (14) qui est disposée perpendiculairement à la face avant (4) et comporte des ouvertures (15) destinées à recevoir les éléments de traction de verrouillage (13) qui sont disposés de manière à coïncider avec les cavités (12).

3. Tête de distribution (1) selon l'une des revendications précédentes, **caractérisée en ce que** les ouvertures d'écoulement (3, 9, 10) comportent respectivement un coupleur (8) qui est intégré à la tête de distribution (1) ou qu'un manchon de raccordement (17) est raccordé à l'ouverture d'écoulement (3, 9, 10).

4. Tête de distribution (1) selon l'une des revendications précédentes, **caractérisée en ce que** les ouvertures d'écoulement (3, 9, 10) sont une ouverture d'amenée de liquide (3) (feed), une ouverture d'évacuation de perméat (9) et/ou une ouverture d'évacuation de concentré (10).

5. Tête de distribution (1) selon l'une des revendications précédentes, **caractérisée en ce que** la tête de distribution comporte un diffuseur (18) qui est disposé dans le raccord tubulaire.

6. Corps de boîtier de membrane (2) pour le dessalement d'eau de mer ou d'eau saumâtre par osmose inverse avec au moins deux têtes de distribution (1) selon l'une des revendications 1 à 5, **caractérisé en ce que** le corps de boîtier de membrane présente une résistance à la pression de jusqu'à 100 bar de pression du liquide.

7. Installation pour le dessalement d'eau de mer ou d'eau saumâtre par osmose inverse comportant au moins un corps de boîtier de membrane (2) selon la revendication 6 et au moins un élément formant une membrane (22) dans chaque corps de boîtier de membrane.

8. Installation selon la revendication 7, où l'installation comporte au moins deux ou plusieurs corps de boîtier de membrane (2) selon la revendication 6, **caractérisée en ce qu'**un élément de traction de verrouillage (13) est guidé à travers les cavités (12) des têtes de distribution (1) respectivement adjacentes.

9. Installation selon la revendication 8, **caractérisée en ce que** les têtes de distribution (1) adjacentes sont positionnées au moyen des éléments de traction de verrouillage (13) de telle manière que l'ouverture d'écoulement (3, 9, 10) de la première tête de distribution (1) est couplée de manière étanche aux liquides avec l'ouverture d'écoulement (3, 9, 10) de la seconde tête de distribution (1) adjacente.
